# FASCICULE DE BREVET EUROPEEN

(11) **EP 1 771 899 B1**
(45) Date de publication et mention de la délivrance du brevet: **27.02.2008**
(21) Numéro de dépôt: 05794942.2
(22) Date de dépôt: 29.07.2005
(51) Int. Cl.: H01M 4/02, H01M 4/04, H01M 4/40, H01M 10/40

(54) **PROCEDE DE FABRICATION D'UNE ELECTRODE LITHIEE**
VERFAHREN ZUR HERSTELLUNG EINER LITHIUMHALTIGEN ELEKTRODE
METHOD OF PRODUCING A LITHIUM-BEARING ELECTRODE

(30) Priorité: 30.07.2004 FR 0451738
(43) Date de publication de la demande: 11.04.2007
(73) Titulaire: COMMISSARIAT A L'ENERGIE ATOMIQUE, 75015 Paris (FR)
(72) Inventeur: SALOT, Raphaël, F-38250 LANS-EN-VERCORS (FR); LAFORGE, Benjamin, F-38100 GRENOBLE (FR); BOUCHER, Henri, F-38740 VALBONNAIS (FR)
(74) Mandataire: Poulin, Gérard
(86) Numéro de dépôt international: PCT/FR2005/050633
(87) Numéro de publication internationale: WO 2006/021718

(56) Documents cités:
- EP-A- 1 282 179
- WO-A-01/97304
- WO-A-20/04012283
- US-A- 6 162 560
- US-B1- 6 398 824

## Description

### DOMAINE TECHNIQUE

La présente invention se rapporte à procédé de fabrication d'une électrode lithiée.

Une telle électrode peut, en premier lieu, être utilisée pour la réalisation de batteries au lithium en couches minces et, en particulier, de microbatteries destinées à entrer dans la constitution de cartes à puces, notamment en vue d'en renforcer la sécurité, d'étiquettes "intelligentes", d'articles d'horlogerie, d'outils de communication miniaturisés tels que des téléphones et micro-ordinateurs portables, ou encore de microsystèmes du type capteurs physiques, chimiques ou biocapteurs, actuateurs, circuits microfluidiques et analogues.

Elle peut, également, être utilisée pour la réalisation de cellules électrochromes ou de supercapacités en couches minces.

### ÉTAT DE LA TECHNIQUE ANTÉRIEURE

Les microbatteries "tout solide" sont des batteries dont tous les composants (collecteurs de courant, électrodes positive et négative, électrolyte) se présentent sous forme de couches minces et constituent un empilement actif qui mesure au total de l'ordre de 10 à 15 micromètres d'épaisseur. Cet empilement actif est encapsulé dans un matériau propre à le protéger du milieu environnant et, notamment, de l'humidité, et qui se présente également sous forme de films minces.

Le principe de fonctionnement de ces microbatteries repose sur l'insertion et la désinsertion (intercalation-désintercalation) d'ions d'un métal alcalin ou de protons dans l'électrode positive. Il s'agit le plus souvent d'ions lithium issus d'une électrode en lithium métallique.

Les couches minces sont réalisées par dépôt physique en phase vapeur (ou PVD pour *Physical Vapor Deposition*) ou par dépôt chimique en phase vapeur (ou CVD pour *Chemical Vapor Deposition*) selon la nature des matériaux qui les constituent. Différents matériaux peuvent, en effet, être utilisés. Ainsi, par exemple :
- les collecteurs de courant, qui sont métalliques, peuvent être à base de platine, de chrome, d'or ou de titane ;
- l'électrode positive peut être constituée de LiCoO₂, LiNiO₂, LiMn₂O₄, CuS, CuS₂, WO_{y}S_{z}, TiO_{y}S_{z} ou de V₂O₅ ;
- l'électrolyte, qui doit être à la fois bon conducteur ionique et isolant électronique, peut être un matériau vitreux à base d'un oxyde de bore, d'un oxyde de lithium ou d'un sel de lithium, et notamment à base de phosphate lithié comme un LiPON ou un LiSiPON qui représentent à ce jour les électrolytes les plus performants ;
- l'électrode négative peut être formée de lithium métallique, d'un alliage métallique à base de lithium ou bien d'un composé d'insertion du type SiTON, SnNₓ, InNₓ ou SnO₂ ; tandis que
- le matériau d'encapsulation peut être une céramique, un polymère du type hexaméthyldisiloxane ou parylène, un métal, ou bien il peut être formé par la superposition de différents couches constituées par ces matériaux.

Selon les matériaux utilisés, la tension de fonctionnement des microbatteries "tout solide" est comprise entre 1 et 4 volts, tandis que leur capacité surfacique est de l'ordre de quelques dizaines de microampères heure par cm².

Ces microbatteries présentent de nombreux avantages. En particulier, le caractère solide et, qui plus est, en couches minces des éléments qui les constituent permet de les fabriquer dans une grande variété de formes et de surfaces, avec une potentialité de production industrielle automatisée, à cadence élevée et donc à faible coût. De plus, la recharge d'une microbatterie est en général complète après quelques minutes de chargement.

La plupart des microbatteries actuellement proposées utilise comme espèce ionique, des ions lithium qui sont fournis par l'un des matériaux formant les électrodes. Généralement, il s'agit, soit d'une électrode négative (anode) en lithium métallique, soit d'une électrode positive (cathode) constituée d'un matériau d'insertion lithié comme, par exemple, un oxyde mixte cobalt/lithium, nickel/lithium ou manganèse/lithium.

Or, chacune de ces solutions présente des inconvénients majeurs. Ainsi, le point de fusion du lithium étant de 181°C, les anodes en lithium métallique limitent fortement les possibilités d'utilisation des microbatteries à des températures élevées. De plus, le lithium métallique étant très réactif vis-à-vis du milieu environnant, ce type d'anodes requiert une encapsulation, ce qui est pénalisant.

L'utilisation d'un matériau d'insertion lithié du type oxyde mixte, en tant que cathode, nécessite, elle, d'effectuer un recuit thermique de ce matériau à de très hautes températures, c'est-à-dire de l'ordre de 600°C ou supérieures, pour favoriser sa cristallisation et augmenter son aptitude à insérer/désinsérer les ions lithium. Or, un tel recuit est incompatible avec un montage des microbatteries dans des microsystèmes par la technologie dite "Above-IC", qui vise à placer ces microbatteries en partie supérieure des circuits intégrés, ces derniers n'étant, en effet, pas en mesure de supporter de telles températures.

Les Inventeurs se sont, donc, fixé pour but de fournir des électrodes lithiées aptes à entrer dans la constitution de microbatteries au lithium et, d'une manière générale, de toute batterie au lithium en couches minces, et qui soient dénuées des inconvénients précités.

### EXPOSÉ DE L'INVENTION

Ces buts sont atteints, et d'autres encore, par un procédé de fabrication d'une électrode lithiée, qui comprend :
- le dépôt sur un substrat de plusieurs couches d'un matériau d'électrode non lithié et de plusieurs couches de lithium pour former un empilement constitué d'une alternance de couches de matériau d'électrode non lithié et de couches de lithium, cet empilement commençant et se terminant par une couche de matériau d'électrode non lithié, et
- le recuit thermique de l'empilement ainsi formé.

Ainsi, le procédé selon l'invention prévoit d'utiliser un matériau d'électrode non lithié, du type de ceux classiquement utilisés dans des batteries au lithium et dont la mise en oeuvre ne nécessite pas de recuit à des températures dépassant 300°C, et de le lithier *in situ,* en associant plusieurs couches de ce matériau d'électrode non lithié à plusieurs couches de lithium (ce qui ne nécessite pas non plus le recours à des températures élevées) et en soumettant ensuite l'ensemble de ces couches à un recuit thermique de sorte à favoriser la diffusion du lithium dans le matériau d'électrode non lithié.

On obtient ainsi au final une électrode formée d'un seul matériau contenant du lithium.

D'une manière générale, il est souhaitable que l'électrode présente une composition homogène à l'issue du dépôt sur le substrat des couches de matériau d'électrode non lithié et de lithium.

Conformément à l'invention, une composition homogène peut être obtenue en favorisant la diffusion du lithium par le recuit thermique mais également en multipliant le nombre de couches de matériau d'électrode non lithié et de lithium que l'on dépose sur le substrat.

Aussi, le procédé selon l'invention comprend-t-il, de préférence, le dépôt sur le substrat :
a) d'une couche de matériau d'électrode non lithié,
b) d'une couche de lithium, et
c) d'une couche de matériau d'électrode non lithié,
et la répétition des étapes b) et c) de 1 à 30 fois selon le niveau d'homogénéité de composition recherché, ce qui conduit à un empilement comprenant de 3 à 32 couches de matériau d'électrode non lithié pour de 2 à 31 couches de lithium.

De préférence également, le recuit thermique est effectué à une température allant de 100 à 300°C et sous atmosphère neutre, par exemple d'argon, une telle température étant suffisante pour favoriser la diffusion du lithium compte tenu de son point de fusion.

En particulier, le recuit thermique est effectué à une température d'environ 200°C pendant environ 1 heure, soit *in situ,* c'est-à-dire dans le même bâti que celui où est réalisé le dépôt des couches de matériau d'électrode non lithié et de lithium sur le substrat, soit dans un autre bâti.

Le dépôt sur le substrat des couches de matériau d'électrode non lithié et de lithium peut être réalisé par les techniques classiques de dépôt de couches minces et, en particulier, par les techniques PVD. Notamment, on dépose les couches de matériau d'électrode non lithié par pulvérisation cathodique radiofréquence (ou RF pour "radiofrequency") ou en courant continu (ou DC pour "direct current"), tandis que l'on dépose les couches de lithium par évaporation thermique sous vide.

Compte tenu que le procédé selon l'invention ne comporte aucune opération nécessitant une température au-delà de 300°C, il permet de fabriquer indifféremment la première ou la seconde électrode d'une batterie en couches minces, cette électrode pouvant jouer le rôle d'électrode négative ou d'électrode positive. Aussi, le substrat peut-il être aussi bien être un collecteur de courant (fabrication de la première électrode) qu'un électrolyte déjà associé à une électrode et à un collecteur de courant (fabrication de la deuxième électrode).

Selon l'invention, le matériau d'électrode non lithié peut être *a priori* tout matériau dépourvu de lithium et qui est apte à insérer cet élément, et en particulier tout matériau non lithié classiquement utilisé comme électrode positive ou négative dans une batterie au lithium, pour autant qu'il puisse être déposé en couches et, en particulier, en couches minces, c'est-à-dire en couches d'épaisseur au plus égale à 5 micromètres.

A titre d'exemples de matériaux non lithiés classiquement utilisés comme électrodes positives, on peut citer les oxydes de vanadium, par exemple V₂O₅, les oxydes de manganèse, les sulfures de cuivre (CuS, CuS₂, ...), les oxysulfures de titane TiO_{y}S_{z} et les oxysulfures de tungstène WO_{y}S_{z}, tandis qu'à titre d'exemples de matériaux non lithiés classiquement utilisés comme électrodes négatives, on peut citer le silicium et ses alliages (NiSi, FeSi, ...), l'étain et ses alliages (Cu₆Sn₅, SnSb, Ni₃Sn₂, ...), le carbone, les nitrures d'indium InNₓ, les nitrures d'étain SnNₓ, les oxydes d'étain, par exemple SnO₂, les oxydes de cobalt, par exemple Co₃O₄, et les SiTON (oxynitrures d'étain et de silicium).

Conformément à l'invention, on peut également utiliser du carbone amorphe (a:CH), CₓN ou CₓS. avec une structure désorganisée, en tant que matériau d'électrode non lithié.

Avantageusement, les couches de matériau d'électrode non lithié présentent chacune une épaisseur de 50 nm à 1 µm environ, tandis que les couches de lithium présentent chacune une épaisseur de 10 nm à 0,5 µm environ.

Le procédé selon l'invention présente de nombreux avantages. En effet, bien qu'il comprenne le dépôt sur un substrat de deux matériaux différents sous forme de couches, il permet de réaliser un matériau lithié homogène, apte à servir d'électrode négative ou d'électrode positive dans une batterie au lithium. Il offre, de plus, la possibilité de contrôler, au cours de la fabrication de l'électrode, la quantité de lithium qui est ajoutée au matériau d'électrode non lithié et d'optimiser cette quantité en fonction du type de matériau d'électrode non lithié utilisé.

Il présente, encore, l'avantage d'être simple à mettre en oeuvre, de ne comporter aucune opération nécessitant une température supérieure à 300°C et, par voie de conséquence, d'être parfaitement compatible avec les procédés de production industrielle utilisés en microélectronique et, notamment, avec un montage des microbatteries en "Above-IC" dans les microsystèmes.

Est aussi décrite ici une batterie au lithium en couches minces qui comprend une électrode lithiée telle que précédemment définie, cette électrode pouvant jouer le rôle d'électrode négative ou d'électrode positive.

En particulier, cette batterie au lithium est une microbatterie.

D'autres caractéristiques et avantages de l'invention apparaîtront mieux à la lecture du complément de description qui suit, qui se rapporte à deux exemples de réalisation de microbatteries comprenant une électrode lithiée fabriquée conformément à l'invention.

Bien entendu, ces exemples ne sont donnés qu'à titre d'illustrations de l'objet de l'invention et ne constituent en aucun cas une limitation de cet objet.

### EXPOSÉ DÉTAILLÉ DE MODES DE REALISATION PARTICULIERS

### Exemple 1 : réalisation d'une microbatterie V₂O₅/LiPON/ Li₂₂Si₅

Dans un bâti ALCATEL 650 multicible, (diamètre des cibles de pulvérisation : 150 mm), on réalise une microbatterie comprenant :
* une couche de V₂O₅ comme première électrode,
* une couche de LiPON comme électrolyte, et
* une couche de Li₂₂Si₅ comme deuxième électrode.

La couche de V₂O₅ est réalisée de façon conventionnelle, c'est-à-dire par pulvérisation cathodique RF ou DC, à partir d'une cible de vanadium ou de V₂O₅ et en présence d'oxygène, sur du platine lui-même déposé sur un substrat en silicium. La couche de LiPON est également réalisée de façon conventionnelle par pulvérisation cathodique RF, à partir d'une cible de Li₃PO₄ et en présence d'azote.

La couche de Li₂₂Si₅ est elle, réalisée en déposant, sur la couche de LiPON, 5 couches de silicium de 150 nm d'épaisseur chacune, séparées les unes des autres par une couche de lithium de 100 nm d'épaisseur, et en soumettant l'empilement ainsi obtenu à un recuit à 200°C pendant 1 heure, sous atmosphère d'argon.

Le dépôt des couches de silicium est effectué par pulvérisation cathodique RF, à partir d'une cible de silicium, dans les conditions suivantes :
puissance : 200 W
atmosphère 1,3 Pa argon
distance substrat/cible : 90 mm
vitesse de dépôt : 0,6 µm/heure.

Le dépôt des couches de lithium est, lui, effectué par évaporation thermique, à partir d'une cible de lithium métallique, dans les conditions suivantes :
substrat non refroidi
distance substrat/cible : 95 mm
pression résiduelle : 10⁻⁶ mbar
puissance : 110 A
vitesse de dépôt : 0,8 µm/heure.

Il est à noter qu'il est parfaitement possible de fabriquer la même microbatterie en commençant par réaliser la couche de Li₂₂Si₅ sur un collecteur de courant, puis en déposant successivement la couche de LiPON et la couche de V₂O₅.

### Exemple 2 : réalisation d'une microbatterie LiTiOS/ LiPON/Si

Dans un bâti ALCATEL 650 multicible, (diamètre des cibles de pulvérisation : 150 mm), on réalise une microbatterie comprenant :
* une couche de LiTiOS comme première électrode,
* une couche de LiPON comme électrolyte, et
* une couche de silicium comme deuxième électrode.

La couche de LiTiOS est réalisée en déposant, sur du platine lui-même déposé sur un substrat en silicium, 10 couches de TiOS de 100 nm d'épaisseur chacune, séparées les unes des autres par une couche de lithium de 50 nm d'épaisseur, et en soumettant l'empilement ainsi obtenu à un recuit à 200°C pendant 1 heure, sous atmosphère d'argon.

Le dépôt des couches de TiOS est effectué par pulvérisation cathodique RF, à partir d'une cible de titane et sous atmosphère d'argon + H₂S, dans les conditions suivantes :
puissance : 500 W
atmosphère 0,2 Pa argon + H₂S
distance substrat/cible : 90 mm
vitesse de dépôt : 0,67 µm/heure.

Le dépôt des couches de lithium est effectué par évaporation thermique, à partir d'une cible de lithium métallique, dans les mêmes conditions que celles utilisées dans l'exemple 1.

On réalise ensuite les couches de LiPON et de silicium de façon conventionnelle, c'est-à-dire : par pulvérisation cathodique RF, à partir d'une cible de Li₃PO₄ et en présence d'azote, pour la couche de LiPON, et par pulvérisation cathodique RF ou DC, à partir d'une cible de silicium et sous argon, pour la couche de silicium.

## Revendications

1. Procédé de fabrication d'une électrode lithiée, qui comprend :
- le dépôt sur un substrat de plusieurs couches d'un matériau d'électrode non lithié et de plusieurs couches de lithium pour former un empilement constitué d'une alternance de couches de matériau d'électrode non lithié et de couches de lithium, cet empilement commençant et se terminant par une couche de matériau d'électrode non lithié, et
- le recuit thermique de l'empilement ainsi formé.

2. Procédé selon la revendication 1, qui comprend le dépôt sur le substrat :
a) d'une couche de matériau d'électrode non lithié,
b) d'une couche de lithium, et
c) d'une couche de matériau d'électrode non lithié,
et dans lequel les étapes b) et c) sont répétées de 1 à 30 fois.

3. Procédé selon la revendication 1 ou la revendication 2, dans lequel le recuit thermique est effectué à une température allant de 100 à 300°C et sous atmosphère neutre.

4. Procédé selon la revendication 3, **caractérisé en ce que** le recuit thermique est effectué à une température d'environ 200°C pendant environ 1 heure.

5. Procédé selon l'une quelconque des revendications précédentes, dans lequel les couches de matériau d'électrode non lithié sont déposées par pulvérisation cathodique.

6. Procédé selon l'une quelconque des revendications précédentes, dans lequel les couches de lithium sont déposées par évaporation thermique sous vide.

7. Procédé selon l'une quelconque des revendications précédentes, dans lequel le matériau d'électrode non lithié est choisi parmi les oxydes de vanadium, les oxydes de manganèse, les sulfures de cuivre, les oxysulfures de titane et les oxysulfures de tungstène.

8. Procédé selon l'une quelconque des revendications 1 à 6, dans lequel le matériau d'électrode non lithié est choisi parmi le silicium et ses alliages, l'étain et ses alliages, le carbone, les nitrures d'indium, les nitrures d'étain, les oxydes d'étain, les oxydes de cobalt et les SiTON.

9. Procédé selon l'une quelconque des revendications précédentes, dans lequel les couches de matériau d'électrode non lithié présentent chacune une épaisseur de 50 nm à 1 µm environ.

10. Procédé selon l'une quelconque des revendications précédentes, dans lequel les couches de lithium présentent chacune une épaisseur de 10 nm à 0,5 µm environ.

## Claims

1. Process for manufacturing a lithiated electrode, which comprises:
- the deposition, on a substrate, of several layers of a non-lithiated electrode material and several lithium layers in order to form a multilayer consisting of an alternation of layers of non-lithiated electrode material and lithium layers, this multilayer starting with and terminating with a layer of non-lithiated electrode material; and
- the thermal annealing of the multilayer thus formed.

2. Process according to Claim 1, which comprises the deposition, on the substrate:
a) of a layer of non-lithiated electrode material;
b) of a lithium layer; and
c) of a layer of non-lithiated electrode material,
and in which steps b) and c) are repeated from 1 to 30 times.

3. Process according to Claim 1 or Claim 2, in which the thermal annealing is carried out at a temperature ranging from 100 to 300°C and in an inert atmosphere.

4. Process according to Claim 3, **characterized in that** the thermal annealing is carried out at a temperature of about 200°C for about 1 hour.

5. Process according to any one of the preceding claims, in which the layers of non-lithiated electrode material are deposited by sputtering.

6. Process according to any one of the preceding claims, in which the lithium layers are deposited by vacuum thermal evaporation.

7. Process according to any one of the preceding claims, in which the non-lithiated electrode material is chosen from vanadium oxides, manganese oxides, copper sulphides, titanium oxysulphides and tungsten oxysulphides.

8. Process according to any one Claims 1 to 6, in which the non-lithiated electrode material is chosen from silicon and alloys thereof, tin and alloys thereof, carbon, indium nitrides, tin nitrides, tin oxides, cobalt oxides and SiTONs.

9. Process according to any one of the preceding claims, in which the layers of non-lithiated electrode material each have a thickness of about 50 nm to 1 µm.

10. Process according to any one of the preceding claims, in which the lithium layers each have a thickness of about 10 nm to 0.5 µm.

## Patentansprüche

1. Verfahren zum Herstellen einer Lithium enthaltenden Elektrode, umfassend:
- das Aufbringen mehrerer Schichten aus einem kein Lithium enthaltenden Elektrodenmaterial und mehrerer Schichten aus Lithium auf ein Substrat zum Bilden eines Stapels, der eine Wechselfolge von Schichten aus kein Lithium enthaltendem Elektrodenmaterial und Schichten aus Lithium darstellt, wobei dieser Stapel mit einer Schicht aus kein Lithium enthaltendem Elektrodenmaterial beginnt und endet, und
- das Tempern des so gebildeten Stapels.

2. Verfahren gemäß Anspruch 1, das das Aufbringen
a) einer Schicht aus kein Lithium enthaltendem Elektrodenmaterial,
b) einer Schicht aus Lithium und
c) einer Schicht aus kein Lithium enthaltendem Elektrodenmaterial
auf das Substrat umfaßt und bei dem die Stufen b) und c) 1 bis 30 Mal wiederholt werden.

3. Verfahren gemäß Anspruch 1 oder Anspruch 2, bei dem das Tempern bei einer Temperatur von 100 bis 300 °C und unter einer inerten Atmosphäre ausgeführt wird.

4. Verfahren gemäß Anspruch 3, **dadurch gekennzeichnet, daß** das Tempern bei einer Temperatur von etwa 200 °C während etwa 1 Stunde ausgeführt wird.

5. Verfahren gemäß einem der vorangehenden Ansprüche, bei dem die Schichten aus kein Lithium enthaltendem Elektrodenmaterial durch Kathodenzerstäubung aufgebracht werden.

6. Verfahren gemäß einem der vorangehenden Ansprüche, bei dem die Schichten aus Lithium durch thermische Vakuumverdampfung aufgebracht werden.

7. Verfahren gemäß einem der vorangehenden Ansprüche, bei dem das kein Lithium enthaltende Elektrodenmaterial aus Vanadiumoxiden, Manganoxiden, Kupfersulfiden, Titanoxysulfiden und Wolframoxysulfiden ausgewählt wird.

8. Verfahren gemäß einem der Ansprüche 1 bis 6, bei dem das kein Lithium enthaltende Elektrodenmaterial aus Silizium und seinen Legierungen, Eisen und seinen Legierungen, Kohlenstoff, Indiumnitriden, Eisennitriden, Eisenoxiden, Cobaltoxiden und SiTON ausgewählt wird.

9. Verfahren gemäß einem der vorangehenden Ansprüche, bei dem jede Schicht aus kein Lithium enthaltendem Elektrodenmaterial eine Dicke von etwa 50 nm bis 1 µm aufweist.

10. Verfahren gemäß einem der vorangehenden Ansprüche, bei dem jede Schicht aus Lithium eine Dicke von etwa 10 nm bis 0,5 µm aufweist.
